## Europäisches Patentamt
## European Patent Office
## Office européen des brevets

(11) Publication number: **0 182 263**
**B1**

# EUROPEAN PATENT SPECIFICATION

(45) Date of publication of patent specification: **25.04.90**

(51) Int. Cl.⁵: **A 01 G 9/10, A 01 C 1/04**

(21) Application number: **85114387.5**

(22) Date of filing: **12.11.85**

(54) **A windable or foldable planting tape provided in the longitudinal direction of the tape with pockets placed consecutively and containing plants or viable plant material as well as a process for producing the tape.**

(30) Priority: **12.11.84 DK 5371/84**

(43) Date of publication of application:
**28.05.86 Bulletin 86/22**

(45) Publication of the grant of the patent:
**25.04.90 Bulletin 90/17**

(84) Designated Contracting States:
**AT BE CH DE FR GB IT LI LU NL SE**

(56) References cited:
**DD-A- 63 201**
**DE-A-2 344 935**
**DE-U-1 854 217**
**DE-U-1 877 266**
**GB-A-1 041 133**

(73) Proprietor: **BENTLE PRODUCTS AG**
**Grabenstrasse 1 Postfach 409**
**CH-6301 Zug (CH)**

(72) Inventor: **Ahm, Poul Henrik Edificio Vigo**
**Avenida Mesa y Lopez 35 7 H. Portal 2**
**E-35080 Las Palmas Gran Canaria (ES)**

(74) Representative: **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820 D-8000 München 86 (DE)**

Courier Press, Leamington Spa, England.

## Description

The invention relates to a windable or foldable planting tape, comprising in its longitudinal direction a plurality of pockets made of two opposing wall-forming layers of fibrous material, the pockets containing viable plant material such as seedlings or bedding plants or seeds without any further growth medium in between said two layers, and being spaced apart in the longitudinal direction by a predetermined distance.

When growing gardening, forestry, and agricultural products of the kind where it is usually desired that the plants are placed with a specific mutual spacing on the habitat and harvested after a shorter or longer period, the technique used has developed for many years in order to reduce the working costs in connection with the growing and in order to increase and improve the yield. Beyond the more general measures in this connection — such as carrying out a suitable preparation and processing of the earth or the growth medium, a suitable selection of the seed or plant material, and a suitable care of the crop through fertilizers, optional watering, disease and weed-killing, as well as parallel thereto an increasing mechanization of the working processes — intensive efforts have been made during recent years to ensure an optimum development of the plants in the first phase of their growing period. The latter has partly been performed by purpose-treating the seed or plant material and partly by a more controlled initial development in purpose-packings of seedlings or plants designed to be transplanted later on one by one on the habitat. These previously known products and processes have, however, involved relatively labour-requiring and consequently expensive methods or packings per se being relatively expensive and/or material-consuming. Thus it has only been possible to obtain savings compared to those earlier production methods that are being very labour requiring and/or very uncertain as to the growth.

One of the more significant improvements during recent years has been the germinator described in Danish Patent Application No. 1733/ 81. This germinator comprises a plastics cover about a hygroscopic textile in contact with a seed, a seedling or a plant cutting. Such germinators may be produced in coherent lengths, and are intended for being transplanted on the permanent habitat after a controlled germination and/or growth of the plant material in a moist layer of sand and after separation from the main length by cutting or tearing off. Then the plastics cover protects the roots of the plant against drying out during the period immediately following transplanting, and by the roots of the plants and the plastics covers upon the transplanting touching a constantly moist layer of earth a maximum of completely developed plants is obtained. In using said germinator, which is industrially producable, it is possible to ensure a high percentage of plants capable of surviving on the habitat.

From the GB—A—1 041 133 it is furthermore known to have a seed pack in which the seeds are encapsulated in a similar manner in pockets in a tape formed by localized adherence of two layers of material such as for instance paper, textile, plastics film or the like materials, and where the tape is rolled up or folded into a pack. The material is stated to possess a strength sufficient for keeping together the pack after having been completely moistened and during the germination and development of the seeds in the pack into plants ready for transplanting. Subsequently, the pack is opened and the plants are removed and transplanted one by one in the soil or a similar growth medium. The layers of material of the known tape are of such a nature that the roots of the plants do not stick thereto so that the plants can be removed from the tape for transplanting without damaging the roots.

From DE—U—1 854 217 it is known to insert germinated plant material between two adhesive tapes to form a windable planting tape which can be placed mechanically in the soil in undisrupted form. The tape is made of a material which in dry condition has sufficient strength but may disintegrate in the soil, such as paper or textile fabric.

The object of the present invention is to provide a windable or foldable planting tape of the kind stated above which is inexpensive to manufacture and which allows a hitherto unsurpassed efficient and mechanized control of the production of the tape including the germination and/or forcing of the plants contained in the planting tape, as well as the transport and placing or transplanting of the plants on the permanent habitat while simultaneously ensuring a high percentage of usable plants.

It is a further object of the invention to provide a process for producing such a planting tape.

The invention improves a windable or foldable planting tape as mentioned above and is characterized in that said two layers forming the walls of the pockets consist of a material penetrable by roots of the plant material and enabling the supply of air and water necessary for the development of the plant material such as paper, fibres or wadding, and in that at least one of the layers is provided on its outer side thereof with a coating such as a plastics coating reducing evaporation and preventing the pocket wall from being penetrated by roots of the plant material, and in that the tape has a tensile strength sufficient for mechanical handling including transplanting of the tape in undisrupted form to a growth medium such as soil.

The nature and the shape of the materials used for the tape and the shape of the tape itself with a small material thickness without particular growth medium inbetween render it possible to produce the tape at an unusually low unit price or price per plant compared to the previously known systems. The fact that the tape furthermore is windable or foldable implies that a very high number of plants can be stored at a small area and consequently that it is inexpensive to store and transport said tapes and to provide facilities for a suitably controlled germination and growth additionally facilitated by the capability of the material of enabling a supply and adjustment of the required quantity of air and water. Furthermore the strength of the tape and the position at a predetermined mutual spacing of the pockets on the tape as well as their securing initially of the plant material and subsequently also of the plants without allowing the roots and the tops of the plants to penetrate through pocket walls, will always make the tape suited for mechanical, optionally fully automatic handling including transplanting of the tape on the permanent habitat for the plants without damaging the tape nor the plants as said plants are protected by the pockets.

The tape may be shaped in many different ways. For instance it may comprise two continuous layers of tape material in the longitudinal direction of the tape, said two layers of tape material simultaneously forming the opposing walls of the pockets. The tape may also be merely one continuous layer on which measured lengths of another layer are secured at intervals to form the pockets together with the continuous layer, and whereby the continuous layer optionally possesses varying dimensions in and between the pockets. Alternatively, the pockets of the tape may be produced individually by one or more materials and subsequently transferred to one or more separate elongate supporting members, such as tapes or strings to which the pockets are adhered, or tapes with securing means of varying types for the pockets. The two layers of the pockets may be joined in a manner known per se, such as for instance by adhering, melting together, crimping or pleating, and the inserted plant material can be adhered to at least one of the two layers of the pocket.

When rolled up and incorporating the plants ready for transplanting, the tapes facilitate the transplanting to a hitherto unsurpassed degree whether it is carried out manually, semi-automatically or fully automatically, as none of said procedures necessitate a handling of each plant separately like the known systems. Furthermore an exact and uniform placing of the plants is ensured in a simple manner both mutually and relative to the growth medium. The tape idea according to the invention as described above implies that the transplanting can be fully automated, which is a unique and advantageous feature not yet known.

Simply because the tape is suited for fully automated handling and transplanting with the industrially forced plants ready for transplanting, completely new possibilities of a rational planting of great areas with uniform growth-ensured plants are obtained while using a minimum of labour and materials. The technique used renders it possible furthermore to carry out the transplanting as early as the seed leaf stage of the plants where the plants are far more resistant to weather changes than larger setting plants with developed foliage leaves. Thus a greater security for healthy plants with the greatest possible yielding capacity is simultaneously obtained. Finally it is now possible to obtain an essentially better utilization of the growth period in the fields for a series of crops not previously allowing a transplanting of pre-cultured plants in an economically justifiable manner. The latter can either lead to an earlier harvest or to an extension of the entire growth period or to both, thereby resulting in a higher yield.

According to a preferred embodiment of the planting tape the pockets containing undesired bedding plants or plant material such as unsprouted seeds, weaklings, and plants or plant material infected by disease have been removed, and the remaining strips housing bedding plants or plant material have been reaffixed onto the tape at a predetermined spacing between them, preferably corresponding to the spacing subsequently desired between the bedding plants at their ultimate place of growth. In this manner there is obtained a 100% efficient utilization both of the area for the permanent habitat of the plants and consequently of the substances added to the area such as fertilizers, water, and spray substances. Furthermore, an optimum uniformity of the plants is obtained and the risk of spreading disease in the crop is minimized. All these features provide an increased area yield and a better utilization of the capital and labour invested. In addition a better basis is provided for a simultaneously automatic harvesting of the regularly placed and uniform plants, all resulting in a better end product.

A particularly profitable embodiment of the planting tape according to the invention is provided by the pockets being completely or partially open alongside both of the opposing edges of the tape, and by the dimensions of the individual pockets having been adapted to each species of bedding plant, among other things in such a way that the length of the pockets transverse to the longitudinal direction of the tape preferably is of approximately the same magnitude as the total expected length of the bedding plant when ready for transplantation. In this manner favourable conditions of growth are provided for each plant in the tape irrespective of the species of the plant, and furthermore it is ensured that during the entire period up to some time after the transplanting the plant is well protected against unfortunate external influences both during the handling of the tape and upon the transplanting thereof.

The above protection of the plants can be ensured and additionally extended by the pocket being a carrier for auxiliary additives such as fungicides, insecticides, and growth-regulating additives such as hormones, pH-regulators, and fertilizers. As a result, an increase or intensifying of the growth can simultaneously be obtained.

For various purposes it is profitable and advantageous when the tensile strength of the tape in the longitudinal direction of the tape at the time of the transplanting is at least 1 Newton, preferably at least 5 Newton, especially at least 10 Newton. In this manner it is ensured that the tape possesses a strength sufficient for overcoming the loads usually arising during the automatic handling, especially during a fully automated sorting and transplanting, without thereby involving a bursting of the tape.

According to a particularly advantageous and preferred embodiment of the planting tape according to the invention, when in the tape, or un-packed form it is at least partially penetrable by light or other types of electromagnetic radiation including particle radiation. This is providing extremely great advantages as it is thereby possible to control for instance a tape with germinated or partly germinated seeds because, merely by the radiation it is possible to detect and register the length and optionally the appearance of the root of the seedling developed within the pocket and to utilize said registration as a measurement of the suitability of the plant. In this manner it is possible to perform the control of each plant, and to sort out unsuited plants at a time when they have not yet reached the state ready for transplanting. This provides a longer period for performing the sorting and means that the sorting can be performed at a stage of the development of the plant where the risk of damages is reduced. Naturally, it is possible, if desired, to perform such sorting several times.

The invention relates further to a process for producing a planting tape comprising the steps of inserting at predetermined spaces along the tape between two layers of fibrous material of which layers at least one is a continuous layer, viable plant material capable of developing into seedlings or bedding plants inside the tape without any further growth medium, fixing the two layers together transverse to the longitudinal direction of the tape to form pockets, the walls of which are formed by said layers, winding or folding up the tape to form a tape package and exposing the tape package to an environment assuring development of said viable plant material inside the tape. This process is characterized in that the viable plant material is inserted between two layers consisting of a material penetrable by roots of seedlings or bedding plants developing from said viable plant material and enabling the supply of air and water in the step of development, such as paper, fibres or wadding, in that at least said one of two layers is provided on its outer side thereof with a coating, such as a plastics coating, reducing evaporation and preventing the roots from penetrating the wall, and in that the tape carrying the developed plant material is mechanically transplanted in undisrupted form to a growth medium such as soil and has a tensile strength sufficient therefor.

The term viable plant material as mentioned above includes seeds, other kinds of sproutable germs, cuttings, meristems and tissue cultures. When inserting the viable plant material between the two layers, said material can be optionally affixed to at least one of the layers. When the tape is wound up into a roll or folded up into a package for exposing to an environmental influence assuring development, the duration and climatic conditions of said influence are preferably controlled by using a combination of time, temperature and moisture inside the tape package, humidity and composition of air and light, which assures the best possible conditions for storing and/or germination, formation of roots and development of the bedding plants, whereafter the tape or parts thereof are optionally cut down into the individual pockets and reassembled onto elongate supporting members to form a new tape keeping the interpocket spacing preferably corresponding to the final spacing between the plants at their ultimate place of growth and optionally while using the above elongate supporting member(s). Such a process ensures that the handling of each plant or plant material is restricted to its initial placing in the tape, for during the remaining stages and the following transplanting only the tape or each pocket is directly handled.

The process may furthermore be carried out manually or to a hitherto unsurpassed degree semi-automatically or fully automatically while employing a consistent industrialized control of the individual stages of the process including the germinating process and the growth of the plants. This procedure ensures very low costs per unit and a maximum germination and growth of the plant material used, and at the same time it produces uniform plants as well as allowing an accurate planning of the time when the plants are ready for transplanting. When seeds or other kinds of plant germs are used as starting material it is possible and profitable to transplant the tape when the plants have reached the seed leaf stage. The seedlings are more resistant to weather changes than plants with developed foliage leaves. Because of this latter feature and the very low consumption of material per plant it is also economically advantageous and possible in practice to carry out the germination and growth of the plants at a central place and subsequently to send the tapes ready for transplanting over great distances, optionally by air.

It is furthermore practical to place the packaged tape coiled or folded in a pack such as for instance a container of polystyrene, in which a hygroscopic, finely granular porous material such as Vermiculite, Perlite or sand is placed in the bottom, said material serving to adjust the moisture and allowing a slight growth therein of the roots of the plants as well as an easy removal thereof again without breaking off said roots.

The container may be surrounded by a gas and waterproof pack making it suited for storing dry packaged tapes with plant seeds for a longer time without initiating the germination process. This container may furthermore be formed in such a manner that it is suited as a transport container, as a germination container and as a delivery container to be positioned directly in a magazine on a transplanting machine. The germination process itself can for instance be carried out by placing the germination containers in a germination chamber where an accurate control of the temperature, the moisture in the packaged tape and the humidity as well as of the composition of the air and the light is maintained while simultaneously minimizing the consumption of energy.

According to the invention it is advantageous during or after the germination or during or after the formation of roots to remove such pockets containing undesired bedding plants or plant material such as unsprouted seeds, weaklings, and plants or plant material infected by disease, for instance through visual evaluation of the bedding plants under normal light or in ultraviolet light while observing a particular colour effect or through measuring the length of the root or the radicle by transillumination or by another type of radiation of the tape containing plant material or bedding plants or by measuring the heat distribution in the tape and registering the length of the root and subsequently comparing the result of the measurements with a fixed norm. The inspection itself of the plants can be performed without contact and automatically, and — especially when the inspection employs tape-penetrating radiation or the measuring of the distribution of heat in the tape with reference to a measuring of the root length of the plants—the procedure can be carried out at a far earlier stage than allowed by the known systems and methods. After the sorting out of unsuitable pockets the tape can be reassembled with a predetermined distance between the pockets, and it is possible thereby to ensure that the tapes ready for transplanting consists only of pockets containing suitable plants of a uniform size and growing capacity. In this manner an efficient utilization of the following investment in labour, machinery, and remaining growing media is obtained.

By a preferred embodiment of the process according to the invention the removal is preferably effected automatically by means of a combined measuring, cutting, and removing apparatus, through which the tape is passed, and by the subsequent automatic reassembly of the remaining pockets with a predetermined spacing therebetween, thus creating a tape ready for transplanting, possibly by using new additional elongate supporting members, which could be retrieved during or after the transplanting or which would ultimately decay in the soil. In this manner an additional automation of the production of the final tape is obtained, which provides an additional reduction of costs.

A particularly advantageous embodiment of the process especially suited for use in connection with tapes containing plants developed from plant seeds includes the steps of subjecting the bedding plants or the plant material after the germination but prior to transplanting, preferably while the tape is still rolled up or folded together, to a temporary growth-regulating influence such as a retardation or a stopping of the growth by applying a specific combination of light and heat in order to restrain or stop the further development of the bedding plants or the plant material as a countermeasure against delays arising from adverse weather conditions or by prolonged transportation, whereby the undesirable effects of prolonged storage could be minimized or even eliminated and secondly an optimum condition for the establishment and growth of the plant after transplantation could be assured. In this connection it turned out that especially seedlings of certain species of plants can stand such a retardation of the growth stopping the growth for up to several weeks without influencing the quality of the final product to a significant degree. Such a process is therefore particularly advantageous and suitable in connection with the tapes and packaged tapes used where only very little room is required and consequently restricted expenses are involved for the establishment of the retardation of the growth, because very little tape material is used for each plant. This measure presents highly essential advantages beyond the previous systems where transplanting plants with foliage leaves are employed the growth of which can only be restrained for a few days beyond the calculated moment of transplanting before they are unsuited and consequently have to be discarded.

The invention will be described below by means of some embodiments and with reference to the accompanying drawing, in which

Figure 1 illustrates a planting tape according to the invention with seedlings in mutually spaced pockets,

Figures 2a and 2b a packaged tape of the tape of Figure 1,

Figures 3 and 4 planting tapes with viable plant material,

Figures 5 and 6 alternative embodiments of the planting tape of Figure 1 with mutually spaced pockets containing seedlings on auxiliary tapes,

Figures 7 and 8 alternative processes for producing the planting tape and the packaged tape,

Figure 9 a vertical sectional view through a germination container with a packaged tape containing tapes with viable plant material,

Figure 10 tapes with partly germinated seeds, and

Figure 11 the embodiment of Figure 10, but whereby the undesired plant material have been sorted out and the remaining pockets with plant material have been placed at a predetermined spacing on a further auxiliary tape.

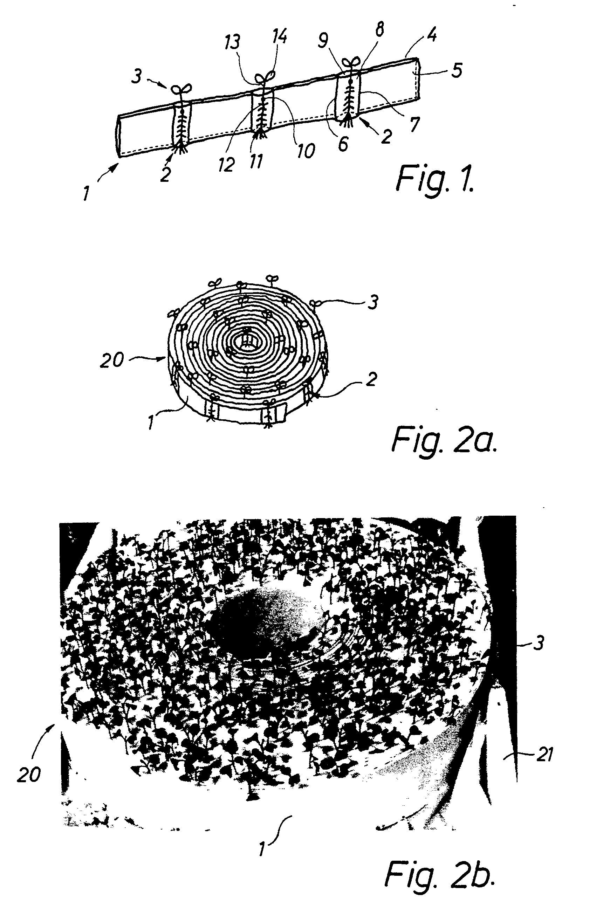

Figure 1 illustrates a tape 1 containing pockets 2 with seedlings 3. The tape comprises two parallel lengths of material 4, 5 interconnected along joining lines 6, 7 on their respective side of the seedlings 3. Thus the resulting flat pockets 2 comprise two opposing walls 8, 9, joint at the sides, but open top and bottom. In the drawing the thickness of the pockets and the tape has been exaggerated for the sake of clarity. In practice the tape is, however, completely flat merely with a slight bulging in the pockets solely determined by the thickness of the seedlings. For the sake of clarity the seedlings appear through the material length 5, but in practice the material lengths 4, 5 need not be transparent. The seedlings 3 have been illustrated at the stage suitable for their transplanting. In the drawing the seed 10 of the seedling appears as well as the root 11 of the seedling with the adventitious roots 12 and the stem 13 with seed leaves 14. At the stage illustrated of the development of the plant the adventitious roots of the plant adhere to the material lengths 4, 5 and the plant extends slightly beyond the lower and open ends of the pockets. The tape is bendable and windable or foldable and possesses a great strength in the longitudinal direction in such a manner that it is suited for advancing on machinery.

Figure 2a illustrates a packaged tape 20 in a spirally-wound packed form of a tape 1 as illustrated in Figure 1. As an alternative the tape 1 can be folded into a zigzag form. Correspondingly, Figure 2b shows a packaged tape 20 corresponding to the packaged tape of Figure 2a and placed in a germinating container 21. The material of the tape 1 of this packaged tape comprises two thin paper lengths coated on the outside with a thin plastics film. This film partly provides a protection for the plants by reducing the evaporation from the tape upon the transplanting and partly it prevents the roots of the plants from penetrating the side walls 8, 9 of the pockets. Finally this film assists in increasing the strength of the tape.

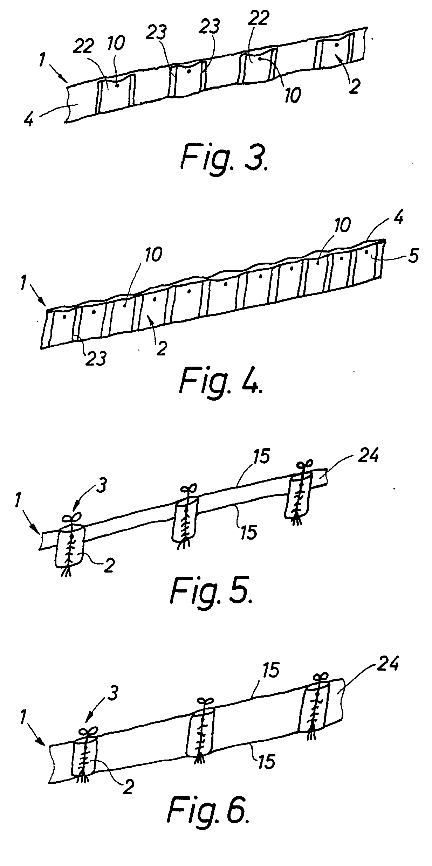

Figure 3 illustrates a second embodiment of the tape 1 at a stage where it still contains nothing but ungerminated seeds 10. This tape comprises a single material length 4 to which the seeds 10 adhere at a predetermined spacing, and whereby the pockets 2 are formed by the material length 4 and pieces of material 22 joined together therewith so as to overlay the seeds 10. The joining procedure has been performed in stripes 23 transverse to the longitudinal direction of the tape in such a manner that the pockets 2 are open at the side edges of the tape in the same manner as illustrated in Figure 1. The pieces of material 22 may be of the same material as the length 4 or of a different material.

Figure 4 illustrates a further embodiment of the tape 1 containing ungerminated seeds 10. As in Figure 1, this tape comprises two lengths 4, 5 of material interconnected in relatively close, relatively broad stripes 23 transverse to the longitudinal direction of the tape in such a manner that adjacent pockets 2 are formed in the tape.

Figures 5 and 6 illustrate two further embodiments of the tape 1, whereby pockets 2 of the kind for instance shown in Figure 4 but with sprouted seedlings 3 have been placed at a desired mutual spacing on auxiliary tapes 24 forming elongate supporting members. The auxiliary tape 24 of Figure 5 is shaped as a relatively narrow tape whereas the auxiliary tape 24 of Figure 6 is of a width corresponding to the dimension of the pockets in the direction across the tape 24. As an alternative the auxiliary tape 24 may comprise one or several strings for instance placed on sites corresponding to the position of the side edges 15 shown in Figures 5 and 6 of the auxiliary tapes 24 illustrated therein.

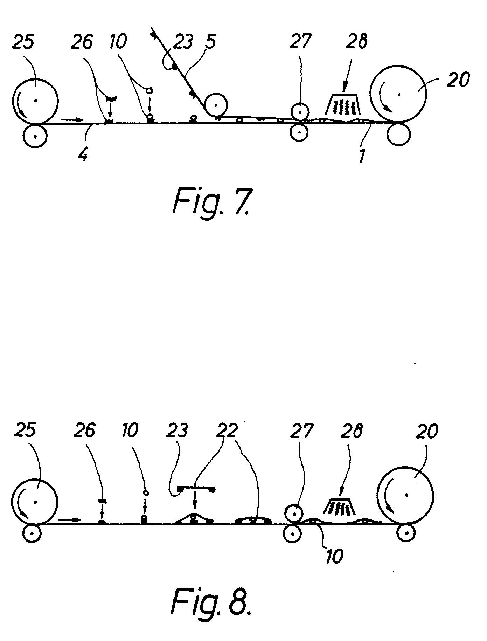

Figures 7 and 8 are diagrammatic views of processes for producing the tape and packaged tape. Figure 7 illustrates a process whereby the starting material is two lengths 4, 5 of material and the plant material is seeds 10. By this process a material length 4 is unwound from a roll 25 of material and advanced on a horizontal plane. On the top side of the length 4 small blobs 26 of glue are applied at specific intervals, whereafter a single seed 10 is placed in each blob of glue. Subsequently, a further length 5 of material is advanced over the length 4 in such a manner that together with said length 4 the length 5 surrounds the seeds 10. On the bottom side of the length 5 stripes 23 of adhesive are applied in the transverse direction of said length at intervals corresponding to the intervals between the seeds 10 on the length 4. By adjusting the two lengths 4, 5 relative to one another in the longitudinal direction thereof the stripes 23 with adhesive are placed in the middle between the seeds 10 whereafter the two lengths are pressed together at least opposite the stripes 23 with adhesive by means of rolls 27, and the adhesive is dried and optionally cured by means of radiant heat 28 before the tape is coiled up into a packaged tape 20. The resulting tape is of the kind shown in Figure 4 with adjacent pockets 2 separated only by the adhesive stripes 23. It is, however, also possible in this manner to produce a tape of the kind shown in Figure 1 by placing the stripes 23 with adhesive in pairs at a spacing corresponding to the width of each pocket 2 and at a spacing between the stripes 23 in pairs corresponding to the spacing between the succeeding pockets 2 in the tape 1. The process also diagrammatically illustrated in Figure 8 does not in principle differ essentially from the above process diagrammatically illustrated in Figure 7. The only difference is that the upper length 5 of material of Figure 7 has been replaced by sheet-shaped pieces 22 of material with stripes of adhesive 23 placed on the underneath face thereof along the two opposing side edges in the transverse direction of the tape. Upon application of the glue blobs 26 and the placing of the seeds 10 the pieces 22 of material are positioned over the seeds with a stripe of adhesive 23 on each side of the seed in the longitudinal direction of the tape. Subsequently, the pieces 22 of material are pressed firmly onto the length 4 and the adhesive is dried and optionally cured by means of radian heat 28. Finally the tape 1 is coiled up into a packaged tape 20 like that of Figure 2a.

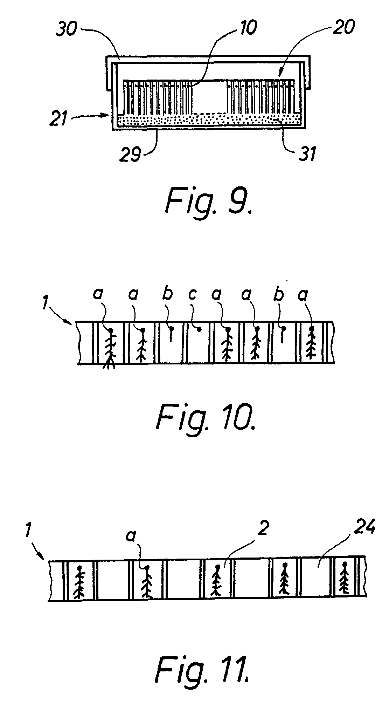

Upon forming of the packaged tape 20 said tape is placed in a germination container 21 of the type shown in Figure 9. This germination container comprises a box-shaped bottom part 29 and an associated transparent cover 30 which may, however, optionally be a differently shaped pack impermeable to aqueous vapour. A layer of moisture-adjusting material 31 such as for instance Vermiculite, Perlite or sand is placed in the bottom of the germination container 21. The packaged tape 20 can be placed on the moisture adjusting layer 31, as in Figure 9, with the seeds 10 positioned adjacent the top edge of the pockets. The germination container 21 shown can be used both as a storing, transporting, and germination container, and also containing the completely sprouted plants, it can be placed directly in a mgazine on a transplanting machine. When the time has come, and still in the germination container 21 with or without cover 30, the packaged tape 20 is exposed to a timely and climatically controlled influence which will ensure a desired germination of the viable plant material and a desired root formation and development of the plants.

If it is desired to effect a sorting out of pockets with undesired plant material and plants during the germination period, the packaged tape 20 is removed from the germination container 21, unwound and thereafter either the tape is illuminated or irradiated by a suitable radiation source or there is carried out a measurement of the distribution of heat in the tape, optionally after a short cooling of the tape (for instance, by passing the tape past a cooling surface immediately prior to the measurement). In this manner it is possible to register the process of the germination and the formation of the roots of each plant material in the pockets, and subsequently the pockets containing undesired plant material can be cut or clipped off—i.e., those pockets containing ungerminated seeds or plant material with an insufficient formation of roots. Figure 10 illustrates part of a tape 1 whereby pockets with normally germinated seeds *a*, with insufficiently germinated seeds *b*, and with an ungerminated seed *c* appear. After the sorting out procedure the remaining pockets are reassembled into a tape 1 of the kind shown in Figure 4 or Figure 1. This tape is then rewound or refolded into a packaged tape 20 and then replaced in the germination container 21 in order to complete the germinating process or until the seedlings 3 have reached the stage of development shown in Figure 1, at which stage they are ready for transplanting. As mentioned, the planting is carried out with the plants placed in the tape 1. However, if desired, the remaining viable pockets may be removed and placed at a suitable spacing (as in Figure 11) on an auxiliary tape 24, as shown above in Figure 5 or Figure 6, said auxiliary tape then being formed into a packaged tape 20 and being placed in the germination container 21 in order to complete the germinating procedure.

When for some reason the tapes containing seedlings ready for transplantation cannot be bedded out immediately in the permanent growing medium, the plants may be subjected to a retardation of the growth while they are still placed in the packaged tape. The growth retardation usually involves a lowering of the temperature and a careful control of the composition of the air, the moisture conditions and of the adjustment of the light. In this manner the seedlings can be stored for several weeks without lowering the quality of the final plants to a significant degree.

Though the specific description refers only to tapes with seeds and seedlings, and to a process for producing such tapes, many other viable plant materials can also in principle be used in producing these tapes merely by a suitable modification of the process (especially as regards the establishment of suitable climatic conditions particularly during the initial phase of the production of the tape until root formation).

**Claims**

1. A windable or foldable planting tape, comprising in its longitudinal direction a plurality of pockets (2) made of two opposing wall-forming layers (4, 5) of fibrous material, the pockets (2) containing viable plant material (3, 10) such as seedlings or bedding plants or seeds without any further growth medium in between said two layers (4, 5), and being spaced apart in the longitudinal direction by a predetermined distance, characterized in that said two layers (4, 5) forming the walls (8, 9) of the pockets (2) consist of a material penetrable by roots (11, 12) of the viable plant material (3, 10) and enabling the supply of air and water necessary for the development of the viable plant material (3, 10), such as paper, fibres or wadding, and in that at least one of the layers is provided on its outer side thereof with a coating, such as a plastics coating, reducing evaporation and preventing the pocket wall (8, 9) from being penetrated by roots of the viable plant material (3, 10), and in that the tape has a tensile strength sufficient for mechanical handling including transplanting of the tape in indisrupted form to a growth medium such as soil.

2. A planting tape as claimed in claim 1, characterized in that the tape comprises pockets (2) reaffixed to the tape with a predetermined spacing to adjacent pockets after having removed pockets (2) from the tape.

3. A planting tape as claimed in claim 1 or 2, characterized in that the pocket (2) is a carrier for auxiliary additives such as fungicides, insecticides and growth-regulating additives such as hormones, pH regulators and fertilizers.

4. A planting tape as claimed in one or more of the claims 1 to 3, characterized in that the tensile strength of the tape in its longitudinal direction at the time of transplanting is at least 1 Newton, preferably at least 5 Newton, especially at least 10 Newton.

5. A planting tape as claimed in one or more of the claims 1 to 4, characterized in that the tape is at least partially penetrable by light or electromagnetic radiation or particle radiation.

6. A process for producing a windable or foldable planting tape comprising the steps of
— inserting at predetermined distances along the tape between two layers (4, 5) of fibrous material, of which layers (4, 5) at least one (4) is a continuous layer (4), viable plant material (10) capable of developing into seedlings or bedding plants (3) inside the tape without any further growth medium,

— fixing the two layers (4, 5) together transverse to the longitudinal direction of the tape to form pockets (2), the walls (8, 9) of which are formed by said layers (4, 5),

— winding or folding up the tape to form a tape package (20),

— and exposing the tape package (20) to an environment assuring development of said viable plant material (10) inside the tape,

characterized in that the viable plant material (10) is inserted between two layers (4, 5) consisting of a material penetrable by roots (11, 12) of seedlings or bedding plants (3) developing from said viable plant material (10) and enabling the supply of air and water in the step of development, such as paper, fibres or wadding, in that at least said one of the two layers (4, 5) is provided on its outer side thereof with a coating, such as a plastics coating, reducing evaporation and preventing the roots (11, 12) from penetrating the wall, and in that the tape carrying the developed plant material (10) is mechanically transplanted in undisrupted form to a growth medium such as soil and has a tensile strength sufficient therefor.

7. A process as claimed in claim 6, characterized in that after the step of development the tape is inspected for evaluation of the plant material and comparing the result with a fixed norm such as through visual evaluation under normal or ultraviolet light while observing a particular color effect, or through measuring the length of the root (11, 12) or the radicle by transillumination or another type of radiation of the tape or through measuring the heat distribution in the tape and registering the length of the root (11, 12), and in that pockets containing insufficiently developed plant material (3) are removed from the tape.

8. A process as claimed in claim 7, characterized in that the removal of pockets (2) is effected by a combined measuring, cutting and removing apparatus and in that the remaining pockets are automatically reassembled thereafter, thus creating a new tape carrying the pockets (2) with a predetermined spacing therebetween ready for transplanting.

9. A process as claimed in one or more of the claims 6 to 8, characterized in that the tape or parts thereof are cut down into individual pockets (2) and are reassembled onto elongate supporting members to form a new tape keeping the pockets at a predetermined spacing.

10. A process as claimed in one or more of the claims 6 to 9, characterized in that after the step of development but prior to transplanting the tape is subjected to a temporary growth-regulating influence such as a retardation or a stopping of the growth by applying a specific combination of light and heat.

**Patentansprüche**

1. Aufwickelbares oder faltbares Pflanzband, das in seiner Längsrichtung mehrere Taschen (2) aus zwei gegenüberliegenden die Wände bildenden Schichten (4, 5) aus einem Fasermaterial umfaßt, wobei die Taschen (2) wachstumsfähiges Pflanzenmaterial (3, 10) wie beispielsweise Sämlinge oder Stecklinge oder Saatkörner ohne ein weiteres Wachstumsmedium zwischen den beiden Schichten (4, 5) enthalten und die Taschen in einem bestimmten Abstand in Längsrichtung voneinander angeordnet sind, dadurch gekennzeichnet, daß die beiden Schichten (4, 5), die die Wände (8, 9) der Taschen (2) bilden, aus einem Material, das die Wurzeln (11, 10) des wachstumsfähigen Pflanzenmaterial (3, 10) durchdringen können und das die Zuführung von Luft und Wasser erlaubt, die für die Entwicklung des wachstumsfähigen Pflanzenmaterials (3, 10) notwendig sind, wie beispielsweise aus Papier, Fasern oder Watte besteht, und daß wenigstens eine der Schichten an ihrer Außenseite mit einer Beschichtung beispielsweise einer Kunststoffbeschichtung versehen ist, die die Verdunstung verringert und verhindert, daß die Taschenwand (8, 9) von den Wurzeln des wachstumsfähigen Pflanzenmaterials (3, 10) durchdrungen wird, und daß das Band eine Zugfestigkeit hat, die für eine mechanische Handhabung einschließlich der Übertragung des Bandes in ununterbrochener Form auf ein Wachstumsmedium wie beispielsweise den Boden ausreicht.

2. Pflanzband nach Anspruch 1, dadurch gekennzeichnet, daß das Band Taschen (2) umfaßt, die an einem Band mit einem bestimmten Abstand zu den benachbarten Taschen neu angebracht sind, nachdem die Taschen (2) von einem Band entnommen wurden.

3. Pflanzband nach Anspruch 1 oder 2, dadurch gekennzeichnet, daß die Tasche (2) ein Träger für Hilfszusatzstoffe wie beispielsweise Fungizide, Insektizide und wachstumsregulierende Zusatzstoffe wie Hormone, pH-Regler und Düngemittel ist.

4. Pflanzband nach einem oder mehreren der Ansprüche 1 bis 3, dadurch gekennzeichnet, daß die Zugfestigkeit des Bandes in seiner Längsrichtung zum Zeitpunkt der Übertragung wenigstens ein Newton vorzugsweise wenigstens fünf Newton und insbesondere wenigstens zehn Newton beträgt.

5. Pflanzband nach einem oder mehreren der Ansprüche 1 bis 4, dadurch gekennzeichnet, daß das Band wenigstens teilweise für Licht oder eine elektromagnetische Strahlung oder eine Teilchenstrahlung durchlässig ist.

6. Verfahren zum Herstellen eines aufwickelbaren oder faltbaren Pflanzbandes, welches die Schritte umfaßt, daß

— in bestimmten Abständen längs des Bandes zwischen zwei Schichten (4, 5) aus einem Fasermaterial, wobei von den Schichten (4, 5) wenigstens eine (4), eine durchgehende Schicht (4) ist, ein wachstumsfähiges Pflanzenmaterial (10) angeordnet wird, das sich zu Sämlingen oder Stecklingen (3) im Inneren des Bandes ohne ein weiteres Wachstumsmedium entwickeln kann,

— die beiden Schichten (4, 5) quer zur Längsrichtung des Bandes aneinander befestigt werden, um Taschen (2) zu bilden, deren Wände (8, 9) durch die Schichten (4, 5) gebildet sind,

— das Band zu einer Bandpackung (20) aufgewickelt oder gefaltet wird, und

— die Bandpackung (20) einer Umgebung ausgesetzt wird, die eine Entwicklung des wachstumsfähigen Pflanzenmaterials (10) im Inneren des Bandes sicherstellt,

dadurch gekennzeichnet, daß das wachstumsfähige Pflanzenmaterial (10) zwischen zwei Schichten (4, 5) eingelegt wird, die aus einem Material bestehen, das die Wurzeln (11, 12) der Sämlinge oder der Stecklinge (3) durchringen können, die sich aus dem wachstumsfähigen Pflanzenmaterial (10) entwickeln, und das die Zuführung von Luft und Wasser während der Entwicklungsphase zuläßt, wie beispielsweise Papier, Fasern oder Watte, daß wenigstens eine der beiden Schichten (4, 5) an ihrer Außenseite mit einer Beschichtung beispielsweise einer Kunststoffbeschichtung versehen wird, wodurch die Verdunstung verringert und verhindert wird, daß die Wurzeln (11, 12) die Wand durchdringen und daß das Band, das entwickeltes Pflanzenmaterial (10) trägt, mechanisch in ununterbrochener Form auf ein Wachstumsmedium wie beispielsweise den Boden übertragen wird und eine Zugfestigkeit hat, die dafür ausreicht.

7. Verfahren nach Anspruch 6, dadurch gekennzeichnet, daß nach der Phase der Entwicklung das Band inspiziert wird, um das Pflanzenmaterial zu begutachten, und daß das Ergebnis mit einer festen Norm beispielsweise über eine optische Begutachtung unter normalem oder ultraviolettem Licht, während ein bestimmter Farbeffekt beobachtet wird, oder über eine Messung der Länge der Wurzel (11, 12) oder der Keimwurzel durch eine Durchleuchtung oder eine Art der Bestrahlung des Bandes oder über eine Messung der Wärmeverteilung im Band und eine Aufzeichnung der Länge der Wurzel (11, 12) verglichen wird, und daß die Taschen, die nicht ausreichend entwickeltes Pflanzenmaterial (3) enthalten, vom Band entfernt werden.

8. Verfahren nach Anspruch 7, dadurch gekennzeichnet, daß die Entfernung der Taschen (2) über eine kombinierte Meß-, Schneid- und Entfernungsvorrichtung bewirkt wird, und daß die verbleibenden Taschen automatisch wieder zusammengesetzt werden, so daß ein neues Band gebildet wird, das Taschen (2) mit bestimmten Abständen dazwischen trägt und zum Übertragen bereit ist.

9. Verfahren nach einem oder mehreren der Ansprüche 6 bis 8, dadurch gekennzeichnet, daß das Band oder Teile des Bandes in einzelne Taschen (2) geschnitten wird oder werden, die an langgestreckten Halteelementen wieder zusammengesetzt werden, um ein neues Band zu bilden, das die Taschen in bestimmten Abständen hält.

10. Verfahren nach einem oder mehreren der Ansprüche 6 bis 9, dadurch gekennzeichnet, daß nach der Phase der Entwicklung, jedoch vor der Übertragung, das Band einem kurzzeitigen wachstumsregulierenden Einfluß beispielsweise einer Verzögerung oder einer Unterbrechung des Wachstums dadurch ausgesetzt wird, daß eine bestimmte Kombination aus Licht und Wärme angewandt wird.

**Revendications**

1. Ruban à planter enroulable ou pliable, comprenant dans sa direction longitudinale plusieurs poches (2) réalisées par deux couches opposées formant des parois (4, 5) en matériau fibreux,

les poches (2) contenant un produit végétal viable (3, 10) tel que des jeunes plants, des plantes ou des graines à mettre en couche sans autre milieu de croissance entre lesdites deux couches (4, 5) et étant espacées en direction longitudinale d'une distance prédéterminée,

caractérisé en ce que lesdites deux couches (4, 5) formant les parois (8, 9) des poches (2) consistent en un matériau pouvant être pénétré par les racines (11, 12) du produit végétal viable (3, 10) et permettant la pénétration de l'air et de l'eau nécessaires au développement du produit végétal viable (3, 10), tel que du papier, des fibres ou de la bourre, et en ce qu'au moins l'une des couches est munie sur son côté extérieur d'un revêtement tel qu'un revêtement en matière plastique réduisant l'évaporation et empêchant la paroi (8, 9) de la poche d'être pénétrée par les racines du matériau végétal viable (3, 10), et en ce que le ruban présente une résistance à la traction suffisante pour une manutention mécanique comprenant la transplantation du ruban sans déformations dans un milieu de croissance tel que le sol.

2. Ruban à planter selon la revendication 1, caractérisé en ce que le ruban comprend des poches (2) refixées sur le ruban selon un espacement prédéterminé par rapport aux poches adjacentes après avoir retiré les poches (2) du ruban.

3. Ruban à planter selon la revendication 1 ou 2, caractérisé en ce que la poche (2) constitue un support pour des auxiliaires tels que des fongicides, des insecticides et des additifs de régulation de la croissance tels que des hormones, des régulateurs de pH et des engrais.

4. Ruban à planter selon l'une quelconque ou plusieurs des revendications 1 à 3, caractérisé en ce que la résistance à la traction du ruban dans sa direction longitudinale au moment de la transplantation est d'au moins 1 Newton, de préférence d'au moins 5 Newton et en particulier d'au moins 10 Newton.

5. Ruban à planter selon l'une quelconque ou plusieurs des revendications 1 à 4, caractérisé en ce que le ruban est au moins en partie pénétrable par la lumière et le rayonnement électromagnétique ou le rayonnement de particules.

6. Procédé pour produire un ruban à planter enroulable ou pliable, comprenant les étapes consistant à:

— insérer à des distances prédéterminées le long du ruban et entre deux couches (4, 5) de matériau fibreux, l'une au moins (4) des couches (4, 5) étant une couche continue (4), un produit végétal viable (10) capable de se développer en de jeunes plants ou en des plantes à mettre en couche (3) à l'intérieur du ruban sans aucun autre agent de croissance,

— fixer les deux couches (4, 5) l'une à l'autre transversalement à la direction longitudinale du ruban pour former des poches (2) dont les parois (8, 9) sont formées par lesdites couches (4, 5),

— enrouler ou plier le ruban pour former un ruban en paquet (20),

— et exposer le ruban en paquet (20) à un environnement assurant le développement dudit produit végétal viable (10) à l'intérieur du ruban, caractérisé en ce que le produit végétal viable (10) est inséré entre deux couches (4, 5) consistant en un matériau pouvant être pénétré par les racines (11, 12) des jeunes plants ou des plantes à mettre en couche (3) qui se développent à partir du produit végétal viable (10) et permettant l'apport d'air et d'eau pendant l'étape de développement, tel que du papier, des fibres ou de la bourre,

en ce qu'au moins l'une desdites deux couches (4, 5) est munie sur son côté externe d'un revêtement tel qu'un revêtement en matière plastique, réduisant l'évaporation et empêchant les racines (11, 12) de pénétrer par la paroi,

et en ce que le ruban supportant le produit végétal développé (10) est transporté mécaniquement sans déformation dans un milieu de croissance tel que le sol et présente une résistance à la traction suffisante à cette fin.

7. Procédé selon la revendication 6, caractérisé en ce qu'après l'étape de développement, le ruban est inspecté pour évaluer le produit végétal et comparer le résultat avec une norme fixe, par exemple par une évaluation visuelle à la lumière normale ou ultraviolette tout en observant un effet de couleur particulier, ou par la mesure de la longueur de la racine (11, 12) ou de la radicule par un éclairage par transparence ou par tout autre type d'irradiation du ruban ou par la mesure de la distribution de la chaleur dans le ruban et l'enregistrement de la longueur de la racine (11, 12), et en ce que les poches contenant du produit végétal insuffisamment développé (3) sont éliminées du ruban.

8. Procédé selon la revendication 7, caractérisé en ce que le retrait des poches (2) est réalisé par un appareil combiné de mesure, de coupe et de retrait, et en ce que les poches restantes sont ensuite automatiquement réassemblées, créant ainsi un nouveau ruban supportant les poches (2) selon un espacement prédéterminé entre elles et prêt à la transplantation.

9. Procédé selon l'une quelconque ou plusieurs des revendications 6 à 8, caractérisé en ce que le ruban ou des parties de celui-ci sont découpées en poches individuelles (2) et sont réassemblées sur des éléments de support allongés pour former un nouveau ruban maintenant les poches selon un espacement prédéterminé.

10. Procédé selon l'une quelconque ou plusieurs des revendications 6 à 9, caractérisé en ce qu'après l'étape de développement et avant la transplantation, le ruban est soumis à une influence temporaire de régulation de la croissance telle qu'un retard ou un arrêt de la croissance par application d'une combinaison spécifique de lumière et de chaleur.

EP 0 182 263 B1

*Fig. 1.*

*Fig. 2a.*

*Fig. 2b.*

1

Fig. 3.

Fig. 4.

Fig. 5.

Fig. 6.

25  26  10    23  5    27  28    20

4                          1

Fig. 7.

25    26    10    23    22    27    28    20

10

Fig. 8.

30 — 10 20

21 —

29 31

## Fig. 9.

a a b c a a b a

1

## Fig. 10.

1 a 2 24

## Fig. 11.